# EUROPÄISCHE PATENTSCHRIFT

(11) **EP 1 044 120 B1**
(45) Veröffentlichungstag und Bekanntmachung des Hinweises auf die Patenterteilung: **20.08.2003**
(21) Anmeldenummer: 99936300.5
(22) Anmeldetag: 22.05.1999
(51) Int. Cl.: B60R 16/02

(54) **WARNEINRICHTUNG FÜR EIN KRAFTFAHRZEUG**
WARNING DEVICE FOR AN AUTOMOBILE
SYSTEME AVERTISSEUR POUR VEHICULE AUTOMOBILE

(30) Priorität: 23.09.1998 DE 19843564
(43) Veröffentlichungstag der Anmeldung: 18.10.2000
(73) Patentinhaber: ROBERT BOSCH GMBH, 70442 Stuttgart (DE)
(72) Erfinder: SCHMID, Dirk, D-71272 Renningen (DE)
(86) Internationale Anmeldenummer: DE9901523
(87) Internationale Veröffentlichungsnummer: WO00017016

(56) Entgegenhaltungen:
- EP-A- 0 419 399
- DE-A- 3 813 083
- DE-A- 19 638 703
- DE-C- 4 209 047

## Beschreibung

Die Erfindung betrifft eine Warneinrichtung, die das Rückwärtsfahren mit einem Fahrzeug einfacher und sicherer machen soll, indem sie den Fahrer des Fahrzeugs vor Hindernissen warnt, mit denen das Fahrzeug zusammenstoßen könnte, wenn es seine Bewegung fortsetzt. Sie betrifft insbesondere eine Warneinrichtung nach dem Oberbegriff des Anspruchs 1.

### Stand der Technik

Die oberbegriffsgemäße Warneinrichtung ist unter der Bezeichnung "Parkpilot"-System der Firma Bosch bekannt. Bei diesem bekannten System erfassen im hinteren Stoßfänger eingebaute Abstandssensoren eventuell hinter dem Fahrzeug befindliche Objekte mittels Ultraschallimpulsen nach dem Echolotprinzip. Die Sensorsignale werden in einer Auswerteund Steuereinrichtung ausgewertet, die die Entfernung des nächsten erkannten Objekts errechnet. Sobald die Berechnung ergibt, daß ein Hindernis weniger als 1,2 m vom Fahrzeug entfernt ist, erfolgt eine Meldung an den Fahrer in Form eines intermittierenden Tonsignals. Die Pause zwischen einzelnen Tönen des Signals verkürzt sich mit der Annäherung an das Hindernis, bis das Signal bei einer Entfernung von 30 cm in einen Dauerton übergeht. Gleichzeitig wird die Entfernung auf einer mehrfarbigen LED-Anzeige angezeigt, die im Fond des Fahrzeugs angebracht ist.

Ein solches System leistet gute Dienste beim Einparken eines Fahrzeugs, wo sich das Fahrzeug in der Regel mit sehr niedrigen Geschwindigkeiten bewegt und sein Bremsweg zumeist vernachlässigbar ist, wo der Fahrer aber auf Informationen über alle eventuellen Hindernisse angewiesen ist, die auch nur ungefähr in der Fahrtrichtung seines Fahrzeugs liegen.

Beim Rückwärtsfahren über größere Entfernungen und mit höherer Geschwindigkeit ist die Effektivität dieses Systems beschränkt, da die Zeit, die zwischen dem Eintreffen eines Warnsignals und dem Zusammenstoß mit dem Hindernis zur Verfügung steht, häufig zu kurz ist, um noch ausweichen zu können.

Eine Erweiterung der Erfassungsgrenze über den genannten Radius von 1,2 m hinaus ist zwar technisch möglich, hätte aber zur Folge, daß eine Vielzahl von Objekten erfaßt und signalisiert würde, die für das Rückwärtsfahren irrelevant sind, beispielsweise, weil sie zu weit von der Fahrtrichtung abliegen, als das sie ein Hindernis darstellen könnten. Der Fahrer würde die überflüssigen Informationen als störend empfinden.

Ein anderes Warnsystem ist in dem Artikel von Neil D. Lerner et al. "Driver Backing Behaviour Research Implications for Backup Warning Devices" (preprint), Transportation Research Board, 76th annual meeting, 12.-16. Januar 1997, Washington DC, beschrieben. Dieses System wird durch Einlegen des Rückwärtsgangs des Fahrzeugs aktiviert. Ein oder mehrere Abstandsensoren erfassen Objekte, die sich in einer Entfernung von etwa 1 m bis 10 m hinter dem Fahrzeug befinden. Ein Steuergerät wertet die Abstandsinformation aus und entscheidet, ob eine Kollisionsgefahr besteht. Kriterium dafür ist die Zeit bis zum Erreichen des Objektes (time-tocollision = TTC). Die Untersuchung von Lerner belegt, daß bei einer vom Fahrer beabsichtigten Annäherung an ein Objekt TTC normalerweise größer als 2 Sekunden ist. Bei einer TTC von weniger als 2 Sekunden ist hingegen die Wahrscheinlichkeit groß, daß der Fahrer das Hindernis nicht erkannt hat. Somit erfolgt eine akustische Kollisionswarnung, wenn das System eine TTC von weniger als 1,5 bis 2 Sekunden errechnet. Für die Ermittlung der TTC erfaßt das System folgende Informationen:
- Objektabstand und ungefähre Objektposition,
- Geschwindigkeit des Objekts und des Fahrzeugs,
- momentale Fahrzeugverzögerung bzw. Beschleunigung,
- Lenkwinkel
Die Ausdehnung des Kollisionswarnbereichs auf Entfernungen unter 1 m ist problematisch, da hier die Warnstrategie nicht mehr sinnvoll zu realisieren ist. Die Geschwindigkeiten, die in üblichen Parkmanövern auftreten, sind zwar gering, ändern sich aber sehr schnell, so daß eine Berechnung der TTC mit großen Ungenauigkeiten behaftet ist. Eine zuverlässige Warnung vor Kollisionen ist anhand des Kriteriums TTC daher bei Abständen unter 1 m nicht mehr möglich.

### Vorteile der Erfindung

Die erfindungsgemäße Warneinrichtung mit den in Anspruch 1 genannten Merkmalen bietet demgegenüber den Vorteil, daß sie sowohl im Nahbereich des Fahrzeugs bei Entfernungen von weniger als 1,5 m, als auch in einem größeren Entfernungsbereich von bis zu etwa 10 m sinnvoll anwendbar ist und in beiden Entfernungsbereichen dem Fahrer nur diejenigen Warnungen vor eventuellen Hindernissen liefert, die er tatsächlich benötigt. Indem unterschiedliche Warnsignale erzeugt werden, je nachdem, ob sich ein Hindernis im Nahbereich des Fahrzeugs oder in einer größeren Entfernung von diesem befindet, ist sichergestellt, daß der Fahrer das wahrgenommene Warnsignal richtig zuordnen und darauf in angemessener Weise reagieren kann.

Der Radius des Nahbereichs kann je nach Bauart des Fahrzeugs und Sichtbereich des Fahrers in Rückwärtsrichtung unterschiedlich gewählt sein, wobei ein Radius von 1 bis 1,5 m, typischerweise 1,2 m ein guter Richtwert für die Grenze zwischen Nahund Fernbereich ist.

Um den Fahrer quantitativ über den abgeschätzten Abstand zu einem Hindernis beziehungsweise das Ausmaß einer Kollisionsgefahr zu informieren, können als Warnsignale intermittierende Signale verwendet werden, deren Periode oder deren Tastverhältnis je nach abgeschätztem Abstand beziehungsweise eingeschätzter Kollisionsgefahr unterschiedlich sein kann. Die Warnsignale können z. B. beide akustische Signale sein. Dies ermöglicht die Verwendung eines gemeinsamen Lautsprechers oder Lautsprechersystems als Warnsignalgeber zur Erzeugung beider Signale.

Die Warnsignale können auch optischer Natur sein, z. B. kann eine Anordnung von Leuchtdioden als Warnsignalgeber verwendet werden. Dabei kann z. B. die Zahl von eingeschalteten Leuchtdioden ein Maß für die abgeschätzte Entfernung sein, und die Leuchtdioden können mit unterschiedlichen Perioden oder Tastverhältnissen blinken, um eine Kollisionsgefahr mit einem Hindernis zu signalisieren, dessen Abstand größer als der Grenzwert ist.

Es kann die Situation auftreten, daß die Warneinrichtung eine Kollisionsgefahr mit einem Hindernis erkennt, das sich im Fernbereich jenseits des Grenzwerts befindet, und infolgedessen zum Zeitpunkt des Eintritts des Hindernisses in den Nahbereich unterhalb des Grenzwerts das Fernbereichs-Warnsignal ausgibt. In einem solchen Fall sollte zweckmäßigerweise auch dann das Fernbereichs-Warnsignal erzeugt werden, wenn das Hindernis in den Nahbereich eingetreten ist, weil ein plötzliches Aufhören des Fernbereichs-Warnsignals, selbst wenn gleichzeitig das Nahbereichs-Warnsignal einsetzt, den Fahrer zu dem Mißverständnis verleiten könnte, daß die Kollisionsgefahr, die Anlaß für das Warnsignal war, behoben ist. Deshalb ist zweckmäßigerweise vorgesehen, daß die Auswerte- und Steuereinrichtung die Ausgabe des Fernbereichs-Warnsignals durch den Signalgeber in einem solchen Fall fortsetzt. Es wird nur dann beendet, wenn die Einschätzung nicht mehr das Vorhandensein einer Kollisionsgefahr ergibt, z. B. weil das Fahrzeug ausreichend abgebremst worden ist oder die Richtung geändert hat, oder wenn das Hindernis den Erfassungsbereich des Sensors verlassen hat.

Um eine Belästigung des Fahrers durch ein langandauerndes Nahbereichs-Warnsignal zu vermeiden, ist in einer Weiterentwicklung der Erfindung ein Schalter zum Sperren der Ausgabe des Nahbereichs-Warnsignals vorgesehen. Dabei ist die Auswerte- und Steuereinrichtung eingerichtet, um die Sperrung aufzuheben, sobald die Abschätzung ergibt, daß das Hindernis sich nicht mehr im Nahbereich befindet, d. h. daß der Abstand zum Hindernis größer als der Grenzwert ist. Infolge dieser Ausgestaltung der Auswerte- und Steuereinrichtung ist sichergestellt, daß bei jedem neuen Eindringen eines Hindernisses in den Nahbereich das Nahbereichs-Warnsignal ausgelöst wird, selbst wenn bei einem früheren Rückwärtsfahrmanöver der Schalter betätigt worden ist.

Gemäß einer weiteren vorteilhaften Weiterentwicklung ist die Warneinrichtung eingerichtet, um die Richtung eines Hindernisses zu erfassen, und sie umfaßt eine Mehrzahl von gleichartigen Warnsignalgebern, die im Fahrzeug verteilt angeordnet sind und in Abhängigkeit von der erfaßten Richtung gesteuert werden, um dem Fahrer diese Richtung anzuzeigen. Dies ermöglicht es dem Fahrer, unmittelbar zu erkennen, in welche Richtung er lenken muß, um dem Hindernis auszuweichen, selbst wenn er es nicht sehen kann, z. B. weil es zu niedrig ist und sich bereits zu nah am Fahrzeug befindet.

Je nach zu erfassendem Entfernungsbereich können unterschiedliche Sensoren zur Erfassung von Hindernissen eingesetzt werden. Dabei sollte ein zur Erfassung im Nahbereich verwendeter Sensor eine breite horizontale Detektionscharakteristik haben, um auch abseits vom aktuellen Kurs des Fahrzeugs liegende Hindernisse erfassen zu können, wohingegen ein zur Erfassung von Hindernissen im Fernbereich vorgesehener Sensor eine engere horizontale Detektionscharakteristik haben sollte, um im wesentlichen nur in Fahrtrichtung liegende Hindernisse zu erfassen. Als Sensoren des Nahbereichs kommen in erster Linie Ultraschallsensoren in Frage; für größere Entfernungen können Ultraschall-, LIDAR- oder RADAR-Sensoren eingesetzt werden.

### Zeichnungen

Weitere Merkmale und Vorteile der Erfindung ergeben sich aus der nachfolgenden Beschreibung von Ausführungsbeispielen mit Bezug auf die Zeichnungen. Es zeigen:
Figur 1 eine Draufsicht auf ein Kraftfahrzeug mit einer erfindungsgemäßen Warneinrichtung,
Figur 2 ein stark schematisiertes Blockdiagramm einer erfindungsgemäßen Warneinrichtung,
Figur 3 einen optischen Warnsignalgeber und
Figur 4 die Abhängigkeit des Tastverhältnisses eines intermittierenden Warnsignals von der Entfernung zum Hindernis.

### Beschreibung der Ausführungsbeispiele

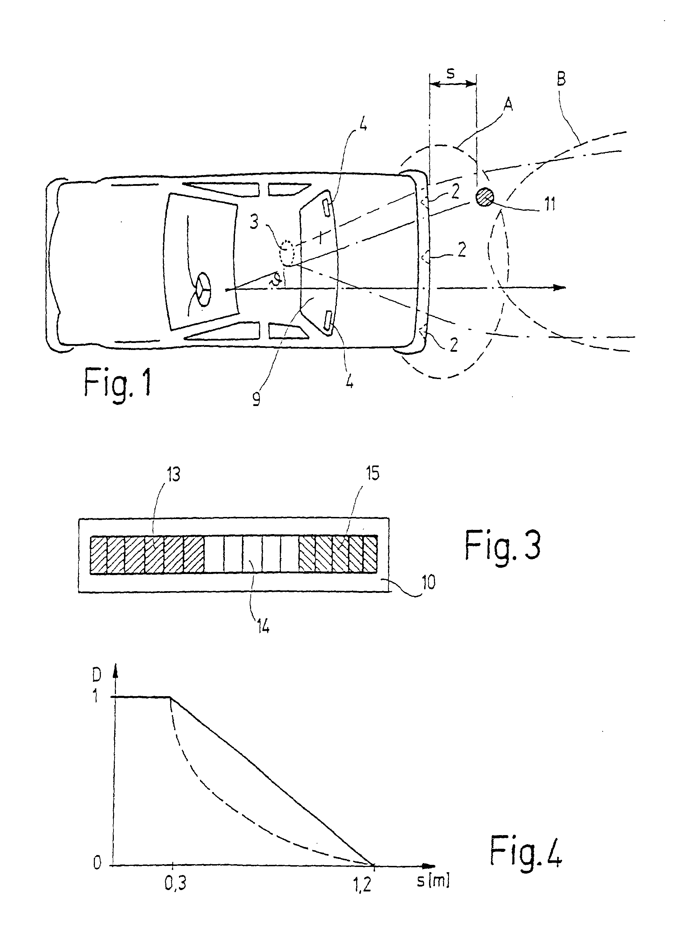

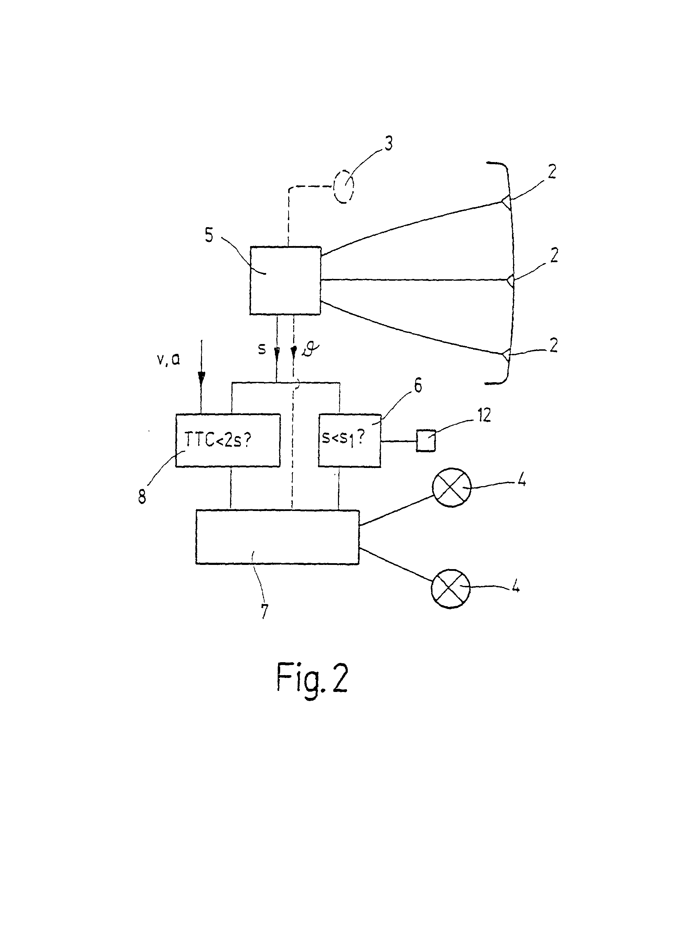

Figur 1 zeigt eine Draufsicht auf ein Kraftfahrzeug mit möglichen Anordnungen von Sensoren und Warnsignalgebern.

Die Warneinrichtung wird automatisch eingeschaltet, wenn der Rückwärtsgang des Kraftfahrzeugs eingelegt wird. Gemäß einer ersten Ausgestaltung umfaßt sie eine Mehrzahl von Ultraschallsensoren 2, die in einen hinteren Stoßfänger 1 des Fahrzeugs eingelassen sind. Jeder dieser Sensoren strahlt periodisch einen Ultraschallimpuls ab und zeichnet das von einem Hindernis 11 zurückkommende Echo auf. Derjenige Anteil des Echosignals, der einer Laufzeit des Ultraschallimpulses von 2 x 1,2 m / c entspricht, wobei c die Schallgeschwindigkeit von 330 m/s in Luft ist, wird von einer Auswerteeinheit 5 (siehe Figur 2) verarbeitet, um Hindernisse in einem Abstand von bis zu 1,2 m zu erfassen. So ergibt sich die durch eine gestrichelte Linie begrenzte Nahbereichs-Nachweiszone A der Ultraschallsensoren 2.

Die Auswerteeinheit 5 erfaßt ferner zu jedem von einem der Ultraschallsensoren ausgesendeten Impuls die Echosignale, die von allen Ultraschallsensoren 2 in einem Laufzeitintervall empfangen werden, das Entfernungen des das Echo zurückwerfenden Objekts von den Sensoren 2 von ca. 1,2 bis 10 m entspricht. Indem nur Echosignale mit einer bestimmten maximalen Phasenverschiebung berücksichtigt werden, läßt sich eine Richtcharakteristik der Gesamtheit der Sensoren 2 erzielen, die etwa dem mit B bezeichneten Fernbereich entspricht.

Gemäß einer zweiten Ausgestaltung werden zur Erfassung von Hindernissen im Nahbereich unterhalb von 1,2 m Abstand die Sensoren 2 genauso wie bei der ersten Ausgestaltung eingesetzt, der Fernbereich bis ca. 10 m wird hingegen durch einen Sensor 3 mit engerer Richtcharakteristik erfaßt, der beispielsweise unter dem Dachhimmel des Fahrzeugs angebracht sein kann und bei dem es sich um einen Ultraschall, LIDAR- oder RADAR-Sensor handeln kann.

Die Auswertung von Laufzeitunterschieden und/oder Intensitätsunterschieden zwischen von unterschiedlichen Sensoren 2 empfangenen Echosignalen ermöglicht der Auswerteeinheit 5 nicht nur die Abschätzung der Entfernung s des Hindernisses 11, sondern gleichzeitig auch die des Winkels θ, den das Hindernis 11 in Bezug zur Fahrtrichtung des Fahrzeugs (in Figur 1 bezogen auf die Position des Fahrers) einnimmt.

Figur 2 zeigt stark schematisiert den Aufbau einer erfindungsgemäßen Warneinrichtung. Sie umfaßt eine Auswerteeinheit 5, die von mehreren Ultraschallsensoren 2 Echosignale empfängt und daraus die Entfernung s eines Hindernisses vom Fahrzeug abschätzt. Die in Figur 2 gezeigten Blöcke können sowohl als Hardware, als auch als Computerprogramm realisiert werden.

Ein für den abgeschätzten Abstand repräsentatives Signal wird an eine Komparatoreinheit 6 ausgegeben, die diesen Abstand mit einem Grenzwert s₁ vergleicht und, wenn der Vergleich ergibt, daß s < s₁ ist, einen Befehl zum Erzeugen eines Nahbereichs-Warnsignals an eine Signalgeber-Steuereinheit 7 ausgibt.

Der Fahrer kann durch Drücken eines Tasters 12 die Ausgabe des Befehls an die Signalgeber-Steuereinheit abbrechen, wenn er sie als störend empfindet. Die Komparatoreinheit 6 bleibt nach dem Drücken des Tasters 12 so lange in einem Sperrzustand, in dem die Befehlsausgabe unterbunden ist, wie der abgeschätzte Abstand s₁ kleiner als s ist. Sobald sich das Fahrzeug vom Hindernis weiter als s₁ entfernt, kehrt die Vergleichseinheit 6 in ihren normalen Zustand zurück, so daß bei erneutem Eintritt eines Hindernisses in den Nahbereich das Nahbereichs-Warnsignal wieder erzeugt wird. Ein Drükken auf den Taster 12, während kein Hindernis im Nahbereich erfaßt wird, kann die Komparatoreinheit nicht in den Sperrzustand bringen und ist daher ohne Wirkung. So ist ausgeschlossen, daß das Nahbereichs-Warnsignal zu einem Zeitpunkt deaktiviert ist, zu dem sich der Fahrer darauf verläßt, daß er nötigenfalls eine Warnung erhält.

Das Signal von der Auswerteeinheit 5 liegt auch an einer Recheneinheit 8 an, die ferner ein Fahrzeuggeschwindigkeitssignal und vorzugsweise auch ein Fahrzeugbeschleunigungssignal und ein Lenkwinkelsignal empfängt. Anhand des geschätzten Abstands s, der Fahrzeuggeschwindigkeit und gegebenenfalls der Beschleunigung berechnet die Recheneinheit 8 die Zeit TTC, die das Fahrzeug benötigt, um das Hindernis zu erreichen, und schätzt anhand dieser Berechnung die Gefahr einer Kollision des Fahrzeugs mit dem Hindernis ein. Wenn TTC kleiner als ein Schwellwert t_{c} zwischen 1,5 und 2 Sekunden ist, wird die Gefahr als gegeben angesehen, und die Recheneinheit gibt an die Signalgeber-Steuereinheit einen Befehl zum Erzeugen eines Fernbereichs-Warnsignals aus.

Die Befehle zum Erzeugen eines Nahbereichs- bzw. Fernbereichs-Warnsignals sind zweckmäßigerweise Signale, die eine quantitative Angabe über den abgeschätzten Abstand s beziehungsweise die berechnete Zeit TTC enthalten.

Die Signalgeber-Steuereinheit 7 steuert in Abhängigkeit von den empfangenen Befehlen zwei Warnsignalgeber 4, die gemäß einer Variante der Erfindung Felder aus verschiedenfarbigen Leuchtelementen, z.B. Leuchtioden, LCD-Segmenten, Glühlampen oder ähnlichen Anzeigeelementen sind. Die Warnsignalgeber 4 sind jeweils im linken und rechten Randbereich der Heckscheibe 9 des Fahrzeugs, z. B. auf der Hutablage, angeordnet. So hat der Fahrer, der beim Rückwärtsfahren durch die Heckscheibe schaut, wenigstens einen der zwei Warnsignalgeber 4 ständig vor Augen.

Wie mit Bezug auf Figur 1 angegeben, kann zur Erfassung von Hindernissen in größeren Entfernungen im Bereich 1,2 bis 10 m ein Sensor 3 mit engerer Richtcharakteristik zusätzlich zu den Ultraschallsensoren 2 eingesetzt werden. Dieser Sensor 3 ist in Figur 2 gestrichelt dargestellt. Auch sein Signal wird gegebenenfalls von der Auswerteeinheit 5 ausgewertet und zusammen mit den Signalen von den Sensoren 2 in ein einheitliches Abstandssignal s umgesetzt.

Wie bereits mit Bezug auf Figur 1 angegeben, ist es durch Berücksichtigung von Unterschieden zwischen gleichzeitig von verschiedenen Sensoren 2 aufgenommenen Signalen der Auswerteeinheit 5 gemäß einer Ausgestaltung der Erfindung möglich, die Richtung eines Hindernisses zu bestimmen und ein diese Richtung θ repräsentierendes Signal auszugeben. Dieses Signal kann dann von der Signalgeber-Steuereinheit 7 ausgewertet werden, um je nach Richtung θ die zwei Warnsignalgeber 4 unterschiedlich zu steuern. So ist es beispielsweise möglich, nur denjenigen der zwei Warnsignalgeber 4 zum Ausgeben eines Warnsignals zu steuern, auf dessen Seite das Hindernis erfaßt wurde, oder die angezeigte Dringlichkeitsstufe des Warnsignals kann für die zwei Warnsignalgeber 4 je nach Richtung des Hindernisses unterschiedlich sein. In Verbindung mit der Information über den Lenkwinkel kann anhand von θ erkannt werden, ob ein detektiertes Objekt neben dem Kurs des Fahrzeugs liegt. In diesem Fall wird eine Fernbereichswarnung unterdrückt.

Figur 3 zeigt ein Beispiel eines Warnsignalgebers 4 zur Anwendung mit einer erfindungsgemäßen Warneinrichtung. Der Warnsignalgeber umfaßt in einem Rahmen 10 eine Zeile von grünen, gelben und roten Leuchtelementen 13, 14, 15. Wenn die Signalgeber-Steuereinheit 7 einen Fernbereichs-Warnbefehl von der Recheneinheit 8 erhält, veranlaßt sie sämtliche Elemente der Zeile zum Blinken. Dabei kann die Blinkfrequenz je nach dem berechneten Wert von TTC unterschiedliche Werte annehmen, um unterschiedlich große Kollisionsgefahren für den Fahrer erkennbar zu machen.

Wenn die Signalgeber-Steuereinheit 7 hingegen einen Nahbereichs-Warnbefehl von der Komparatoreinheit 6 erhält, so steuert sie eine je nach dem in dem Befehl kodierten abgeschätzten Abstand s unterschiedliche Zahl von Leuchtelementen im Warnsignalgeber 4 an. Wenn s den Grenzwert s₁ nur knapp unterschreitet, steuert die Signalgeber-Steuereinheit 7 zunächst ein einzelnes grünes Leuchtelement 13 an, wobei mit abnehmendem Abstand s die Zahl der Leuchtelemente zunimmt und sukzessive auch gelbe 14 und schließlich rote Leuchtelemente 15 eingeschaltet werden.

Anstelle von optischen Warnsignalgebern wie den in der Figur 3 gezeigten Leuchtelementen können gemäß einer weiteren Variante der Erfindung auch akustische Signalgeber, z. B. Lautsprecher eingesetzt werden. Bei diesen Lautsprechern kann es sich z. B. um die Lautsprecher einer Fahrzeug-Stereoanlage handeln, wobei in einem solchen Fall die Signalgeber-Steuereinheit 7, wenn sie die Lautsprecher zum Erzeugen eines Warnsignals steuert, gleichzeitig deren Verbindung zu der Stereoanlage unterbricht.

Wenn die Signalgeber-Steuereinheit 7 nach dieser Ausgestaltung einen Fernbereichs-Warnbefehl von der Recheneinheit 8 erhält, gibt sie an die Warnsignalgeber 4 ein intermittierendes Tonsignal mit einer gut hörbaren Frequenz aus, wobei die Periode oder das Tastverhältnis des intermittierenden Signals von einem in dem Befehl kodierten Wert von TTC abhängig sein kann, um so unterschiedliche Dringlichkeitsgrade der Kollisionswarnung für den Fahrer unterscheidbar zu machen.

Wenn die Signalgeber-Steuereinheit 7 einen Nahbereichs-Warnbefehl von der Komparatoreinheit 6 erhält, überprüft sie zunächst, ob bereits ein Fernbereichs-Warnbefehl vorliegt. Wenn dies der Fall ist, wird der Nahbereichs-Warnbefehl von der Komparatoreinheit 6 zunächst ignoriert, und es wird weiterhin ein Fernbereichs-Warnsignal entsprechend dem von der Recheneinheit 8 erhaltenen Befehl ausgegeben. Wenn beim Eintreffen des Nahbereichs-Warnbefehls kein Fernbereichs-Warnbefehl vorliegt oder wenn die Recheneinheit 8 die Ausgabe ihres Befehls beendet hat, berücksichtigt die Signalgeber-Steuereinheit 7 den Nahbereichs-Warnbefehl und veranlaßt den Warnsignalgeber 4, ein Nahbereichs-Warnsignal mit einer Tonhöhe auszugeben, die sich deutlich von der des durch die Recheneinheit 8 ausgelösten Fernbereichs-Warnsignals unterscheidet.

Da das Fernbereichs-Warnsignal meist die Funktion hat, den Fahrer vor einer unerwarteten Kollisionsgefahr zu warnen, während das Nahbereichs-Warnsignal in der Regel nur bei langsamer Rückwärtsfahrt des Fahrzeugs auftreten kann, bei der der Fahrer zumeist mit dem Auftreten eines Hindernisses rechnet und deshalb bewußt auf das Signal horcht, kann der Aufmerksamkeitswert des Nahbereichs-Warnsignals geringer als der des Fernbereichs-Warnsignals sein, das heißt, es kann leiser sein oder seine Tonhöhe kann geringer sein.

Auch das Nahbereichs-Warnsignal ist bei dieser Ausgestaltung ein intermittierendes Signal. Die Frequenz des Signals ist fest, sein Tastverhältnis, das heißt das Verhältnis der Dauer eines einzelnen Signaltons zur Periode des Signals, ist abhängig von dem abgeschätzten Abstand des Fahrzeugs zum Hindernis. Zwei Beispiele für eine solche Abhängigkeit sind in Figur 4 gezeigt. Wenn sich das Fahrzeug einem Hindernis nähert, so setzt bei Unterschreitung des Grenzabstandes s₁ von in diesem Fall 1,2 m die Erzeugung des Nahbereichs-Warnsignals ein. Gemäß einer ersten Variante, die der durchgezogenen Linie in Figur 4 entspricht, nimmt das Tastverhältnis D mit abnehmendem Abstand linear zu, bis es bei einem Abstand von ca. 0,3 m den Wert 1 erreicht. Bei diesem Abstand geht also das intermittierende Signal in einen Dauerton über.

Gemäß einer zweiten Variante, die durch die gestrichelte Kurve in Figur 4 dargestellt ist, nimmt bei Unterschreitung des Grenzabstands s₁ von 1,2 m zunächst das Tastverhältnis D des ersten Warnsignals langsam mit abnehmendem Abstand zu, steigt kurz vor Erreichen des Abstands von 0,3 m sehr schnell an, um unterhalb von 0,3 m in einen Dauerton überzugehen. Bei diesem Kurvenverlauf ist die Zunahme der Gefahr eines Zusammenstoßes mit dem Hindernis bei abnehmendem Abstand für den Fahrer deutlicher erkennbar als bei der ersten Variante, da sich das Warnsignal in dem Entfernungsbereich, in dem eine Reaktion des Fahrers dringend erforderlich ist, wesentlich deutlicher wahrnehmbar ändert als bei größeren Entfernungen, die noch keine sofortige Reaktion erfordern.

Wenn die Signalgeber-Steuereinheit 7 zusammen mit Lautsprechern als Warnsignalgeber 4 in einer Warneinrichtung eingesetzt wird, die in der Lage ist, die Richtung θ eines Hindernisses in Bezug auf das Fahrzeug zu erfassen und ein entsprechendes Signal an die Signalgeber-Steuereinheit liefert, wie in Figur 2 gezeigt, so ist die Signalgeber-Steuereinheit 7 zweckmäßigerweise mit einer Stereo-Ausgangsstufe ausgestattet, die es gestattet, die Phasenlage der an die zwei Lautsprecher ausgegebenen Warnsignale entsprechend der erfaßten Richtung des Hindernisses anzupassen, so daß der Fahrer A in der Lage ist, dem gehörten Warnsignal eine Richtung zuzuordnen, aus der dieses zu kommen scheint, und die mit der tatsächlichen Richtung θ des Hindernisses übereinstimmt.

## Patentansprüche

1. Warneinrichtung zur Überwachung eines Abstands eines Fahrzeugs beim Rückwärbfahren von einem Hindernis, mit wenigstens einem Sensor (2; 3) zum Erfassen eines Hindernisses, einer Auswerte- und Steuereinrichtung (5,6,7,8) zum Abschätzen eines Abstandes des Fahrzeugs von dem Hindernis anhand eines Ausgangssignals des Sensors (2; 3) und wenigstens einem Warnsignalgeber (4), der von der Auswerte- und der Steuereinrichtung (5,6,7,8) zur Erzeugung eines Nahbereichs-Warnsignals gesteuert wird, wenn der von der Auswerte- und Steuereinrichtung abgeschätzte Abstand (s) kleiner als ein Grenzwert (s₁) ist, **dadurch gekennzeichnet, daß** die Auswerte- und Steuereinrichtung (5,6,7,8) Mittel (8) zum Einschätzen einer Kollisionsgefahr des Fahrzeugs mit dem Hindernis anhand des abgeschätzten Abstands und der Geschwindigkeit des Fahrzeugs umfaßt und daß die Auswerte- und Steuereinrichtung den Warnsignalgeber (4) steuert, um ein Fernbereichs-Warnsignal auszugeben, wenn der abgeschätzte Abstand (5) größer als der Grenzwert (S₁) ist und die Einschätzung das Vorhandensein einer Kollisionsgefahr ergibt.

2. Warneinrichtung nach Anspruch 1, **dadurch gekennzeichnet, daß** der Grenzwert (s₁) zwischen 1 m und 1,5 m beträgt.

3. Warneinrichtung nach Anspruch 1 oder 2, **dadurch gekennzeichnet, daß** das Nahbereichs-Warnsignal ein intermittierendes Signal ist, dessen Periode und/oder dessen Tastverhältnis den abgeschätzten Abstand anzeigt.

4. Warneinrichtung nach einem der vorhergehenden Ansprüche, **dadurch gekennzeichnet, daß** das Fernbereichs-Warnsignal ein intermittierendes Signal ist, dessen Periode und/oder dessen Tastverhältnis die eingeschätzte Kollisionsgefahr anzeigt.

5. Warneinrichtung nach Anspruch 3 oder 4, **dadurch gekennzeichnet, daß** die Warnsignale akustische Signale sind, die sich in der Tonhöhe unterscheiden.

6. Warneinrichtung nach Anspruch 3 oder 4, **dadurch gekennzeichnet, daß** die Warnsignale optische Signale sind, die sich in der Farbe unterscheiden.

7. Warneinrichtung nach einem der vorhergehenden Ansprüche, **dadurch gekennzeichnet, daß** die Auswerte- und Steuereinrichtung (5,6,7,8) den Warnsignalgeber (4) steuert, um das Fernbereichs-Warnsignal auszugeben, während sich ein Hindernis in einem geringeren Abstand als dem Grenzwert (s₁) befindet, wenn zum Zeitpunkt des Eintritts des Hindernisses die Einschätzung das Vorhandensein einer Kollisionsgefahr ergeben hat.

8. Warneinrichtung nach einem der vorhergehenden Ansprüche, **dadurch gekennzeichnet, daß** sie einen Schalter zum Sperren der Ausgabe des Nahbereichs-Warnsignals umfaßt und daß die Auswerte- und Steuereinrichtung eingerichtet ist, die Sperrung des Nahbereichs-Warnsignals aufzuheben, sobald die Abschätzung ergibt, daß der Abstand zum Hindernis größer als der Grenzwert (s₁) ist.

9. Warneinrichtung nach einem der vorhergehenden Ansprüche, **dadurch gekennzeichnet, daß** sie eingerichtet ist, um die Richtung (θ) eines Hindernisses zu erfassen und eine Mehrzahl von gleichartigen Warnsignalgebern (4) umfaßt, die im Fahrzeug verteilt angeordnet sind und in Abhängigkeit von der erfaßten Richtung (θ) betrieben werden, um dem Fahrer diese Richtung anzuzeigen.

10. Warneinrichtung nach einem der vorhergehenden Ansprüche, **dadurch gekennzeichnet, daß** sie wenigstens je einen Sensor eines ersten Typs (2) mit breiter horizontaler Detektionscharakteristik zum Abschätzen von Abständen unterhalb des Grenzwerts (s₁) sowie eines zweiten Typs (3) zur Abschätzung von Abständen oberhalb des Grenzwerts mit enger horizontaler Detektionscharakteristik umfaßt.

11. Warneinrichtung nach Anspruch 10, **dadurch gekennzeichnet, daß** der Sensor des ersten Typs (2) ein Ultraschallsensor ist.

12. Warneinrichtung nach Anspruch 10 oder 11, **dadurch gekennzeichnet, daß** der Sensor des zweiten Typs (3) ein Ultraschall-, LIDAR- oder RADAR-Sensor ist.

## Claims

1. Warning device for monitoring a distance between a reversing vehicle and an obstacle, having at least one sensor (2; 3) for sensing an obstacle, an evaluation and control device (5, 6, 7, 8) for estimating a distance between the vehicle and the obstacle by reference to an output signal of the sensor (2; 3) and at least one warning signal transmitter (4) which is controlled by the evaluation and control device (5, 6, 7, 8) in order to generate a close-range warning signal if the distance (s) estimated by the evaluation and control device is smaller than a limiting value (s₁), **characterized in that** the evaluation and control device (5, 6, 7, 8) comprises means (8) for estimating a risk of collision of the vehicle with the obstacle by reference to the estimated distance and the speed of the vehicle, and **in that** the evaluation and control device controls the warning signal transmitter (4) to make it output a long-range warning signal if the estimated distance (5) is larger than the limiting value (S₁), and the estimation reveals the presence of a risk of collision.

2. Warning device according to Claim 1, **characterized in that** the limiting value (s₁) is between 1 m and 1.5 m.

3. Warning device according to Claim 1 or 2, **characterized in that** the close-range warning signal is an intermittent signal whose period and/or whose pulse duty factor indicates the estimated distance.

4. Warning device according to one of the preceding claims, **characterized in that** the long-range warning signal is an intermittent signal whose period and/or whose pulse duty factor indicates the estimated risk of collision.

5. Warning device according to Claim 3 or 4, **characterized in that** the warning signals are acoustic signals which differ in their pitch.

6. Warning device according to Claim 3 or 4, **characterized in that** the warning signals are optical signals which differ in their colour.

7. Warning device according to one of the preceding claims, **characterized in that** the evaluation and control device (5, 6, 7, 8) controls the warning signal transmitter (4) to make it output the long-range warning signal while there is an obstacle at a smaller distance than the limiting value (s₁) if the estimation has revealed the presence of a risk of collision at the time when the obstacle is encountered.

8. Warning device according to one of the preceding claims, **characterized in that** it comprises a switch for shutting off the outputting of the close-range warning signal, and **in that** the evaluation and control device is designed to cancel the shutting off of the close-range warning signal as soon as the estimation reveals that the distance from the obstacle is larger than the limiting value (s₁).

9. Warning device according to one of the preceding claims, **characterized in that** it is designed to register the direction (θ) of an obstacle and comprises a plurality of warning signal transmitters (4) of the same type, which are arranged distributed in the vehicle and are operated as a function of the registered direction (θ) in order to indicate this direction to the driver.

10. Warning device according to one of the preceding claims, **characterized in that** it comprises in each case at least one sensor of a first type (2) with a broad horizontal detection characteristic for estimating distances below the limiting value (s₁) and of a second type (3) for estimating distances above the limiting value with a tight horizontal detection characteristic.

11. Warning device according to Claim 10, **characterized in that** the sensor of the first type (2) is an ultrasonic sensor.

12. Warning device according to Claim 10 or 11, **characterized in that** the sensor of the second type (3) is an ultrasonic, LIDAR or RADAR sensor.

## Revendications

1. Installation d'alarme pour surveiller une distance d'un véhicule par rapport à un obstacle lors de la marche arrière, avec au moins un détecteur (2; 3) pour enregistrer un obstacle, avec une installation d'exploitation et de commande (5, 6, 7, 8) pour estimer à l'aide d'un signal de sortie du détecteur (2 ; 3) une distance du véhicule par rapport à l'obstacle et avec au moins un générateur de signaux d'alarme (4) commandé par l'installation d'exploitation et de commande (5, 6, 7, 8) pour produire un signal d'alarme de proximité lorsque la distance (s) estimée par l'installation d'exploitation et de commande est inférieure à une valeur limite (s₁),
**caractérisée en ce que**
l'installation d'exploitation et de commande (5, 6, 7, 8) comprend des moyens (8) destinés à estimer un danger de collision du véhicule contre l'obstacle à l'aide de la distance estimée et de la vitesse du véhicule et l'installation d'exploitation et de commande commande le générateur de signaux d'alarme (4) afin d'émettre un signal d'alarme lointaine lorsque la distance (5) estimée est supérieure à la valeur limite (s₁) et que l'estimation établit la présence d'un danger de collision.

2. Installation d'alarme selon la revendication 1,
**caractérisée en ce que**
la valeur limite (s₁) se situe entre 1 m et 1,5 m.

3. Installation d'alarme selon la revendication 1 ou 2,
**caractérisée en ce que**
le signal d'alarme de proximité est un signal intermittent dont la période et/ou le taux d'impulsions indique la distance estimée.

4. Installation d'alarme selon l'une des revendications précédentes,
**caractérisée en ce que**
le signal d'alarme lointaine est un signal intermittent dont la période et/ou le taux d'impulsions indique le danger estimé de collision.

5. Installation d'alarme selon la revendication 3 ou 4,
**caractérisée en ce que**
les signaux d'alarme sont des signaux acoustiques qui se différencient par la hauteur du son.

6. Installation d'alarme selon la revendication 3 ou 4,
**caractérisée en ce que**
les signaux d'alarme sont des signaux optiques qui se différencient par la couleur.

7. Installation d'alarme selon l'une des revendications précédentes,
**caractérisée en ce que**
l'installation d'exploitation et de commande (5, 6, 7, 8) commande le générateur de signaux d'alarme (4) afin d'émettre le signal d'alarme lointaine quand un obstacle se trouve à une distance inférieure à la valeur limite (s₁) lorsqu'au moment où apparaît l'obstacle l'estimation a établi la présence d'un danger de collision.

8. Installation d'alarme selon l'une des revendications précédentes,
**caractérisée en ce qu'**
elle comprend un commutateur destiné à bloquer l'émission du signal d'alarme lointaine et l'installation d'exploitation et de commande est conçue pour supprimer le blocage du signal d'alarme de proximité dès que l'estimation établit que la distance par rapport à l'obstacle est supérieure à la valeur limite (s₁).

9. Installation d'alarme selon l'une des revendications précédentes,
**caractérisée en ce qu'**
elle est conçue pour enregistrer la direction (θ) d'un obstacle et comprend un grand nombre de générateurs de signaux d'alarme (4) de même type qui sont disposés de façon répartie dans le véhicule et qui fonctionnent en liaison avec la direction (θ) enregistrée afin d'indiquer cette direction au conducteur.

10. Installation d'alarme selon l'une des revendications précédentes,
**caractérisée en ce qu'**
elle comprend au moins un détecteur d'un premier type (2) avec une caractéristique de détection horizontale large pour estimer des distances inférieures à la valeur limite (s₁) ainsi qu'un détecteur d'un deuxième type (3) pour estimer des distances supérieures à la valeur limite (s₁) avec une caractéristique de détection horizontale étroite.

11. Installation d'alarme selon la revendication 10,
**caractérisée en ce que**
le détecteur du premier type (2) est un détecteur à ultrasons.

12. Installation d'alarme selon la revendication 10 ou 11,
**caractérisée en ce que**
le détecteur du deuxième type (3) est un détecteur à ultrasons, à lidar ou à radar.
